# EUROPÄISCHE PATENTSCHRIFT

(11) **EP 1 293 369 B1**
(45) Veröffentlichungstag und Bekanntmachung des Hinweises auf die Patenterteilung: **16.06.2004**
(21) Anmeldenummer: 02020463.2
(22) Anmeldetag: 12.09.2002
(51) Int. Cl.: B60J 7/04

(54) **Fahrzeugdach mit ausstellbarem Deckel**
Vehicle roof with a liftable panel
Toit de véhicule avec un panneau basculant

(30) Priorität: 12.09.2001 DE 10144899
(43) Veröffentlichungstag der Anmeldung: 19.03.2003
(73) Patentinhaber: ArvinMeritor GmbH, 63128 Dietzenbach (DE)
(72) Erfinder: Weiss, Edgar, 63755 Alzenau (DE); Oechel, Holger, 60388 Frankfurt/M. (DE); Imgram, Bardo, 63500 Seligenstadt (DE)
(74) Vertreter: Kitzhofer, Thomas, Dipl.-Ing.

(56) Entgegenhaltungen:
- EP-A- 1 010 560
- DE-A- 3 105 717
- DE-A- 19 513 971
- DE-U- 8 107 603

## Beschreibung

Die Erfindung betrifft ein Fahrzeugdach nach dem Oberbegriff des Anspruchs 1.

Aus der gattungsgemäßen DE-U-8 107 603 ist ein Fahrzeugdach bekannt, bei dem der Schlepphebel an seinem vorderen Ende über eine angetriebene Feder beim Anheben des Deckels zusätzlich verschwenkt wird. Die Position dieses Endes des Lagerhebels ist also gerade beim Bewegen des Deckels und im Fahrbetrieb unbestimmt.

Ein weiteres Fahrzeugdach ist aus der DE-GM 87 03 996 bekannt. Bei diesem Fahrzeugdach ist der Schlepphebel ein zweiarmiger Hebel, der an einem Ende mit dem Deckelhimmel und am anderen Ende mit einer fahrzeugdachseitig gelagerten Zugfeder verbunden ist. Zwischen den Enden des zweiarmigen Hebels greift ein am Deckel angebrachter Lagerungshebel an. Bei dem Ausstellen des Deckels wird über das Gestänge auch der hintere Rand des Deckelhimmels mitgenommen. Das Gestänge klappt beim Ausstellen flach zusammen, wodurch bewirkt wird, daß der Deckelhimmel stärker ausgestellt wird als der Deckel selbst und eine große Lüftungsöffnung am hinteren Rand des Deckels und des Deckelhimmels im ausgestellten Zustand erreicht wird. Ein ähnliches Fahrzeugdach ist aus der DE 198 58 676 A1 bekannt.

Die Erfindung schafft ein Fahrzeugdach, bei dem das Gestänge sehr kompakt und vor allem in der Längserstreckung sehr klein baut, wobei aber dennoch ein großer Ausstellwinkel sowohl für den Deckel als auch für den Deckelhimmel ermöglicht wird.

Dies wird durch ein Fahrzeugdach nach Anspruch 1 gelöst. Beim erfindungsgemäßen Fahrzeugdach wird der Schlepphebel aufwärts geschwenkt, so daß das Schwenklager unterhalb der Lagerstelle zum Deckel liegt. Indem aber das Schwenklager selbst nicht ortsfest ist, sondern mittels der Führung beim Ausstellen selbst nach oben bewegt wird, summieren sich für die Höhe der Ausstellbewegung die von der Länge des Schlepphebels abhängige Schwenkverlagerung des Schlepphebels selbst und die Höhenverschiebung seines Schwenklagers zur Gesamtausstellhöhe des hinteren Randes des Deckels. Verglichen mit dem Gestänge bei der DE 198 58 676 A1, bei der das Schwenklager starr an einem nicht höhenverstellbaren Schlitten angebracht ist, kann der Schlepphebel beim erfindungsgemäßen Fahrzeugdach zur Erreichung derselben Ausstellhöhe kürzer ausgeführt sein, so daß das Gestänge insgesamt kompakter wird.

Gemäß der bevorzugten Ausführungsform ist eine dachfeste Längsführung zur Horizontalverschiebung des Deckels vorgesehen, in der ein verfahrbarer Schlitten geführt ist. Die Führung sitzt dabei auf dem Schlitten und wird deshalb beim Verfahren des Schlittens mitbewegt. Üblicherweise sind natürlich auf beiden Seiten des Deckels Führungen mit Schlitten angebracht.

In der bevorzugten Ausführungsform ist die Führung ein schwenkbarer Lagerungshebel, also ein einfaches, kompaktes Bauteil.

Der Lagerungshebel kann einerseits schwenkbar am Schlitten und andererseits über das Schwenklager mit dem Schlepphebel gekoppelt sein. Das Schwenklager wandert beim Ausstellen des Deckels auf einem Kreisbogen aufwärts. Durch diese Hebelmimik läßt sich auch der Kraftangriffspunkt am Deckel relativ einfach weit nach hinten schieben, was sich vorteilhaft auf die Aushebekräfte auswirkt, denn diese können aufgrund der leichter optimierbaren Hebelverhältnisse klein gehalten werden.

Der Schlepphebel hat vorteilhafterweise nahe der Lagerstelle zur Verbindung mit dem Deckelhimmel einen Anschlag, mit dem er bei nicht ausgestelltem Deckel an der Längsführung anliegt. Diese Ausführungsform ist aus mehreren Gründen vorteilhaft. Einerseits ist die Längsführung ein sehr exakt ausgerichtetes Bauteil, welches die Lage des Deckels bestimmt, so daß es auch optimal als Anschlag für die Endposition dienen kann. Darüber hinaus wird der Deckelhimmel keine oder nur eine vernachlässigbare Vertikalbewegung machen, wenn der Deckel zum Zurückschieben (Horizontalverschieben) abgesenkt wird, um unter die Dachhaut verschoben werden zu können. Der Anschlag selbst wird nämlich bei dieser Absenkbewegung nicht abgesenkt, und der Anlenkpunkt zum Schlepphebel liegt nahe am nicht mit nach unten wandernden Anschlag.

Der Anschlag kann, wie gesagt, beispielsweise bei nicht ausgestelltem Deckel an der Längsführung anliegen und den Schlepphebel damit wenigstens einseitig festlegen, er kann aber auch bei geschlossener Dachöffnung und/oder horizontalverschobenem Deckel an der Längsführung anliegen. Der Anschlag kann deshalb auch beim Zurückschieben des Deckels als Gleitführung wirken.

Wenn der Schlepphebel über einen einerseits schwenkbar an ihm und andererseits schwenkbar am Deckel angebrachten Verbindungshebel mit dem Deckel gekoppelt ist, entsteht vorzugsweise ein 3-teiliges Gestänge mit hintereinander angeordneten Hebeln, von denen der Schlepphebel den mittleren bildet. Über das Vorsehen des Verbindungshebels lassen sich die Anhebekräfte nochmals optimieren, zudem ist es möglich, durch die erhöhten Freiheitsgrade ein Verspannen des Systems zu verhindern und die gewünschten Bewegungen von Deckel und Deckelhimmel leichter zu erreichen.

In diesem Zusammenhang ist es besonders vorteilhaft, wenn sich der Schlepphebel bei geschlossener Dachöffnung im wesentlichen horizontal erstreckt, wobei an seinem einen Ende der Lagerungshebel angreift, welcher sich schräg abwärts erstreckt, und wobei an seinem anderen Ende der sich schräg aufwärts erstreckende Verbindungshebel angreift. In der Schließstellung wird damit eine kompakte, fast zusammengeklappte Stellung des Gestänges erreicht, wobei aber keine Totpunktlagen vorgesehen sind, da sich Lagerungshebel und Verbindungshebel nicht parallel zum Schlepphebel, sondern schräg zu ihm erstrecken. Die erläuterten Stellungen der Hebel zueinander in der Schließstellung ermöglichen es auch, den Deckel zum Zurückschieben am hinteren Rand abzusenken. Für diese Absenkbewegung muß nämlich vor allem der ohnehin schräggestellte Verbindungshebel geschwenkt werden. Die Bewegung des Schlepphebels kann dabei sehr gering sein.

Vorzugsweise ist ein mit dem Deckel verbundener, einseitig wirkender Anschlag vorgesehen, der beim Ausstellen des Deckels die Winkelstellung des Verbindungshebels relativ zum Deckel festlegt. Dies soll dazu führen, daß die Verbindungsstelle von Schlepphebel zum Verbindungshebel möglichst unmittelbar angehoben wird, wenn der Deckel ausgestellt wird. Dem Verbindungshebel wird deshalb aufgrund des Anschlags nur eine geringe oder gar keine Schwenkbewegung relativ zum Deckel beim Ausstellen des Deckels zugestanden.

In der Gegenrichtung, beim Absenken des Deckels, insbesondere beim Absenken des hinteren Randes des Deckels aus der Schließstellung zum Horizontalverschieben, wirkt der Anschlag aber nicht, das heißt, er legt die Winkelstellung des Verbindungshebels zum Deckel nicht fest.

Als Verbindung des Schlepphebels mit dem Deckelhimmel ist vorzugsweise eine Kulissenführung vorgesehen, durch die eine Verspannung des Gesamtsystems vermieden wird und durch die auf einfache Weise zusätzliche Funktionen, wie im folgenden erläutert, verwirklicht werden können.

Die Kulissenführung ist vorzugsweise am Deckelhimmel angebracht, aus der beim Horizontalverschieben des Deckelhimmels ein schlepphebelseitiger Führungszapfen ausrastbar ist. Dadurch kann auf einfache Weise ein Zurückschieben des Deckelhimmels, insbesondere bei geschlossener Dachöffnung, ermöglicht werden.

Die Kulissenführung ist gemäß einer Ausgestaltung ein C-förmiges Kunststoffteil, das einen Vorsprung zum Anschlag des Führungszapfens hat, wobei das Kunststoffteil zum Ausrasten des Führungszapfens elastisch so verformt wird, daß der Führungszapfen am Vorsprung vorbeiwandern kann. Dieser Vorsprung definiert eine gewünschte, festgelegte Position des Deckelhimmels, die aber durch einen gewünschten größeren Kraftaufwand verlassen werden kann.

Darüber hinaus kann die Kulissenführung einen Steigungsabschnitt haben, durch den der Deckelhimmel am hinteren Rand zu Beginn des Horizontalverschiebens aus der Schließstellung angehoben wird. Bei dieser Ausführungsform hat die Kulissenführung eine Zusatzfunktion, indem sie die optional vorgesehene vertikale Verschiebung des Deckels zur Freigabe der Dachöffnung steuert.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Seitenansicht des erfindungsgemäßen Fahrzeugdaches bei geschlossener Dachöffnung,
- Figur 2 eine perspektivische Ansi cht des erfindungsgemäßen Daches von schräg außerhalb des Fahrzeugs bei geschlossener Dachöffnung mit teilweise aufgeschnittenem Deckel,
- Figur 3 eine Perspektivansicht des erfindungsgemäßen Fahrzeugdaches bei geschlossener Dachöffnung von oberhalb der Dachöffnung aus gesehen, mit teilweise aufgeschnittenem Deckel, und
- Figur 4 eine Seitenansicht des erfindungsgemäßen Daches bei ausgestelltem Deckel.

In den Figuren ist ein Fahrzeugdach 10, mit einer Dachöffnung 12 dargestellt, die durch einen ausstellbaren Deckel 14 verschließbar ist. Der Deckel 14 ist aus Blech, aus Glas oder aus einem anderen Werkstoff und kann beispielsweise auch Solarzellen tragen.

Im Fahrzeuginneren wird das Fahrzeugdach von einem Fahrzeughimmel verdeckt, wobei der Bereich des Himmels, der den Deckel verdeckt, ein separates bewegliches Teil, nämlich der sogenannte Deckelhimmel 16 ist. Der Deckel ist in einem umlaufenden, fahrzeugfesten Rahmen verschiebbar untergebracht, der die Dachöffnung 12 umgibt. An den beiden seitlichen Rändern der Dachöffnung ist am Rahmen jeweils eine dach- oder rahmenfeste Längsführung 18 vorgesehen. In jeder Längsführung 18 ist ein vorzugsweise motorisch längsverstellbarer Schlitten 20 aufgenommen. Elektromotoren und Verbindungselemente wie drucksteif geführte Antriebskabel oder dergleichen, die mit dem Schlitten 20 zu dessen Verschiebung gekoppelt sind, sind bekannt und sind deshalb zur Vereinfachung weggelassen. Der Deckel 14 ist mit dem Deckelhimmel 16 über ein mehrhebeliges Gestänge 22 gekoppelt. Das Gestänge 22 ist wiederum auf dem Schlitten 20 befestigt, so daß Deckel 14 und Deckelhimmel 16 mit dem Schlitten 20 gekoppelt sind. Der Schlitten 20 samt des auf ihm befindlichen Gestänges 22 ist im hinteren (vorne und hinten beziehen sich auf die Fahrzeugrichtung) Teil des Rahmens angeordnet. Das Gestänge 22 dient dazu, den Deckel 14 und den Deckelhimmel 16 auszustellen, um eine Belüftung des Fahrzeuginnenraums zu ermöglichen. Dies wird dadurch erreicht, daß vor allem der hintere Rand 24 des Deckels 14 angehoben wird. Im vorderen Teil des Deckelhimmels ist dieser z. B. auf eigenem Schlitten in den Längsführungen oder auf den vorderen Schlitten des Deckels gelagert.

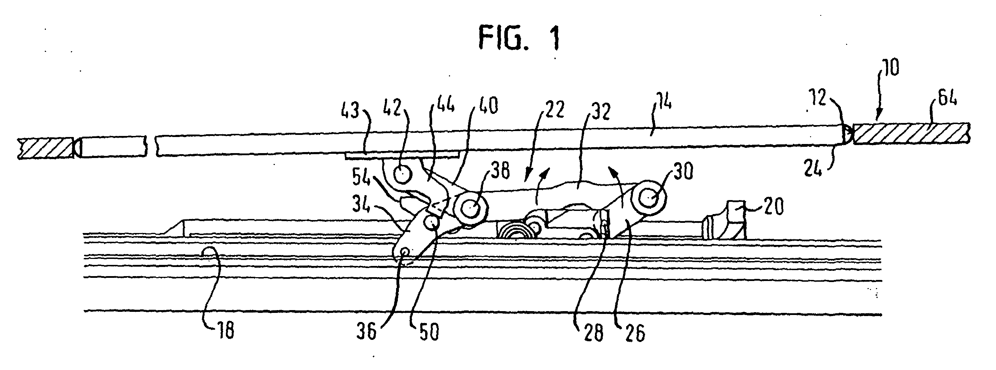

Im folgenden wird der Aufbau des Gestänges beispielhaft an einer Seite des Rahmens näher erläutert. Auf dem Schlitten 20 sitzt ein Lagerungshebel 26, der an einem Ende (unteres Ende, bezogen auf den in Figur 1 gezeigten geschlossenen Zustand) über ein Schwenklager 28 am Schlitten 20 und an seinem anderen Ende über ein Schwenklager 30 mit einem Ende eines langgestreckten Schlepphebels 32 verbunden ist. Während sich der Lagerunghebel 26 im geschlossenen Zustand des Fahrzeugdaches vom Schlitten 20 schräg aufwärts zum Schwenklager 30 erstreckt, ist der Schlepphebel 32 im geschlossenen Zustand im wesentlichen horizontal verlaufend. Der Schlepphebel 32 hat an seinem dem Schwenklager 30 entgegengesetzten freien Ende einen schräg abwärts gekröpften Abschnitt 34, an dessen unterem Ende ein seitlich abstehender, nach unten wirkender Anschlag 36 in Form eines kunststoffbeschichteten Bolzens befestigt ist. Bei nicht ausgestelltem Deckel sowie bei zurückgeschobenem, horizontal verschobenem Deckel 14 liegt der Anschlag 36 auf der Längsführung 18 an.

Der Schlepphebel 32 ist im Bereich seines dem Schwenklager 30 entgegengesetzten Endes an einer Lagerstelle über ein Schwenklager 38 mit einem Verbindungshebel 40 gekoppelt, der sich bei geschlossenem Fahrzeugdach schräg aufwärts bis zu einer Lagerungsstelle in Form eines Schwenklagers 42 erstreckt. Das Schwenklager 42 stellt die Koppelung des Verbindungshebels 40 mit dem Deckel 14 dar. Somit ist das Schwenklager 38 eine indirekte Verbindungs- und Lagerungsstelle des Schlepphebels 32 mit dem Deckel 14. Das Schwenklager 42 wird dadurch gebildet, daß auf der Unterseite des Deckels 14 ein zweischenkeliger Lagerbock 43 befestigt ist, zwischen dessen Schenkel der Verbindungshebel 40 aufgenommen ist. Ein Schenkel des Lagerbocks 43 hat einen Fortsatz 44, der parallel zum Verbindungshebel 40 und in Richtung des Schwenklagers 38 verläuft. Am Ende des Fortsatzes 44 ist ein, mit Bezug auf Figur 1, in die Zeichenebene hinein verlaufender, abgekröpfter Anschlag 46 angeformt, der zwischen den Schwenklagern 38, 42 am unteren Rand des Verbindungshebels 40 anliegen kann und nur einseitig wirkt.

Vom Schwenklager 30 aus gesehen weiter entfernt als das Schwenklager 38 ist eine Lagerstelle zur Verbindung des Schlepphebels 32 mit dem Deckelhimmel vorgesehen. Diese Lagerstelle wird durch einen am Schlepphebel 32 angebrachten, mit Bezug auf Figur 1 rückseitig abstehenden (d.h. in die Zeichenebene hineinragenden) Führungszapfen 50 gebildet. Der Führungszapfen 50 ist in einer Kulissenführung 52 aufgenommen, die einseitig offen ist und durch ein C-förmiges Kunststoffteil 54 gebildet wird, welches auf der Oberseite des Deckelhimmels 16 starr befestigt ist. In Figur 1 ist nur ein oberer Abschnitt des Kunststoffteils 54 zu erkennen. In vertikaler Richtung ist der Führungszapfen 50 im wesentlichen spielfrei in der Kulissenführung 52 untergebracht, in horizontaler Richtung kann der Führungszapfen 50 aber in der Kulissenführung 52 wandern. Wie in Figur 1 zu erkennen ist, ist der Führungszapfen 50 in horizontaler Richtung fast oberhalb des Anschlags 36 angeordnet.

Das Gestänge 22 baut sehr kurz und kompakt und kann dennoch eine starke Ausstellhöhe des Deckels 14 und des Deckelhimmels 18 erlauben.

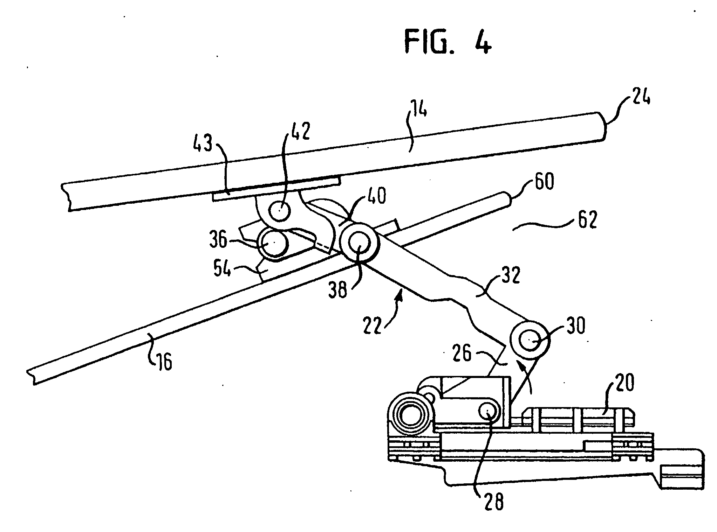

Im folgenden wird das Ausstellen des Deckels 14 näher erläutert. Dieses Ausstellen, das heißt Schrägstellen des Deckels 14, erfolgt über bekannte, nicht dargestellte Antriebe, wobei das Ausstellen natürlich auch manuell erfolgen könnte. Mit dem Anheben des hinteren Randes des Deckels 24 werden auch der Lagerbock 43 und das Schwenklager 42 angehoben. Durch den Anschlag 44, der beim Ausstellen des Deckels 14 wirkt, wird beim Anheben die Winkelstellung des Verbindungshebels 40 zum Deckel 14 festgelegt. Dadurch wird unmittelbar beim Ausstellen des Deckels 14 auch das Schwenklager 38 angehoben. Der Schlepphebel 32 wird dadurch in Pfeilrichtung nach oben, um das Lager 30 geschwenkt. Am Ende der Ausstellbewegung wird zudem der Lagerungshebel 26 in Pfeilrichtung mit aufwärts geschwenkt, wie in Figur 4 zu sehen ist. Das Schwenklager 30 wird somit beim Ausstellen des Deckels 14 auf einem Kreisbogen nach oben bewegt, wobei der Lagerungshebel 26 die Führung für das Schwenklager 30 auf diesem Kreisbogen bildet. Es ist leicht einzusehen, daß ohne den Lagerungshebel 26 die Ausstellhöhe geringer wäre.

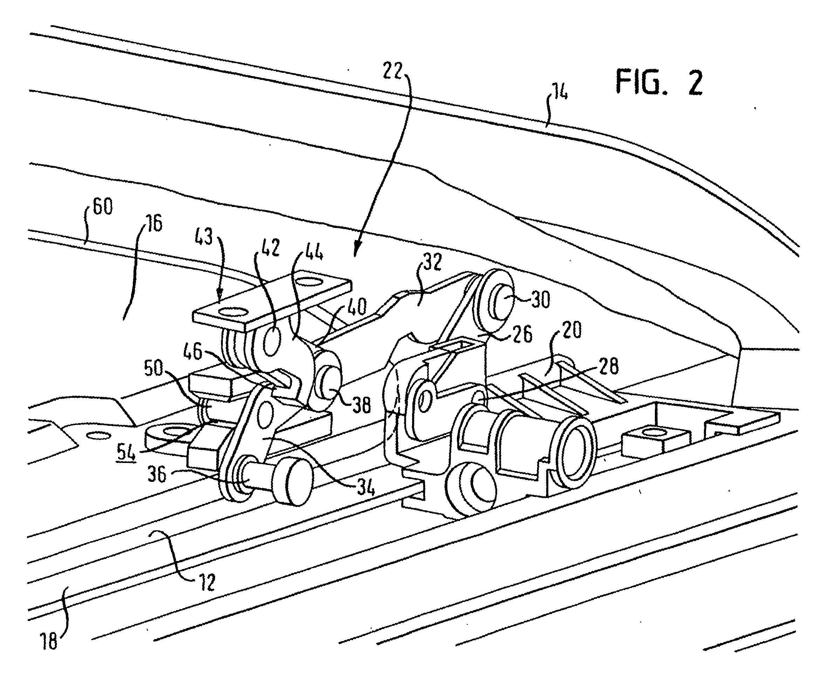

Beim Ausstellen des Deckels 14 ist der Deckelhimmel 16 mit dem Schlepphebel 32 gekoppelt, so daß der Deckelhimmel 16 ebenfalls ausgestellt wird. Bei dieser Ausstellbewegung kann der Führungszapfen 50 geringfügig in der Kulissenführung 52 wandern, was notwendig ist, damit das System nicht überbestimmt ist und sich verspannt. Dadurch, daß der Führungszapfen 50 weiter vom Schwenklager 30 entfernt ist als das Schwenklager 38, ergibt sich eine Art Übersetzung für die Ausstellbewegungen des Deckels 14 und des Deckelhimmels 16, das heißt der hintere Rand 60 des Deckelhimmels 16 ist bei der Ausstellbewegung näher zur Unterseite des Deckels 14 gewandert, verglichen zum Abstand des hinteren Randes 60 zur Unterseite des Deckels 14 bei geschlossener Dachöffnung (siehe Figuren 1 bis 3). Dadurch kann die Lüftungsöffnung 62 sehr groß werden. Beim anschließenden Absenken des Deckels 14 aus der ausgestellten Position wirkt der Anschlag 46 übrigens nicht. Beim Absenken werden die Hebel 26, 32 und 40 jedoch wieder zueinander geschwenkt, bis sie in die in Figur 1 gezeigte Lage kommen und der Anschlag 36 an der Längsführung 18 anliegt.

Der Deckel 14 kann auch nach hinten (in bezug auf Figur 1 nach rechts) unter die angrenzende, feststehende Dachhaut 64 horizontalverschoben werden. Hierzu muß jedoch der hintere Rand 24 zuerst abgesenkt werden. Dies erfolgt manuell oder vorzugsweise motorisch. Das 3-hebelige Gestänge 22 erlaubt dieses Absenken des hinteren Randes 24, indem der Lagerungshebel 26 im Uhrzeigersinn um das Schwenklager 28 und der Verbindungshebel 40 geringfügig gegen den Uhrzeigersinn um das Schwenklager 38 geschwenkt werden. Bei dieser Bewegung entfernt sich der Anschlag 46 vom Verbindungshebel 40 und wirkt nicht. Dadurch, daß der Führungszapfen 50 sehr nahe am Anschlag 36 angeordnet ist und dieser auf der Längsführung 18 anliegt, wird beim Absenken des hinteren Randes 24 der Führungszapfen 50 fast gar nicht vertikal bewegt, so daß der Deckelhimmel 16 für den Fahrzeuginsassen feststehend bleibt.

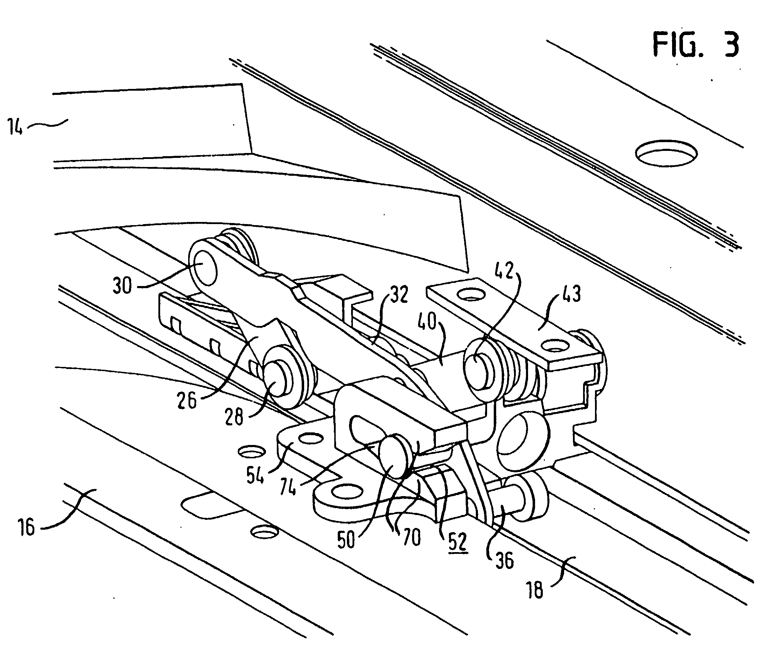

In Figur 3 ist zu erkennen, daß die Kulissenführung 52 nicht durch einen gerade verlaufenden Schlitz gebildet ist, sondern daß sie schräg verlaufende Abschnitte hat.

In Figur 3 ist gezeigt, daß das elastische Kunststoffteil 54 am offenen Ende der Kulissenführung 52 einen von oben und von unten in die Kulissenführung 52 ragenden Vorsprung 70 hat, die als Anschlag für den Führungszapfen 50 dienen. Beim Einsetzen des Führungszapfens 50 gibt das elastische Kunststoffteil 54 elastisch nach, bis der Führungszapfen 50 an den Vorsprüngen 70 entlang wandern kann.

Wenn, optional, der Deckelhimmel 16 horizontal nach hinten zurückgeschoben werden kann, verschiebt sich der Führungszapfen 50 längs der Kulissenführung 52. Die Kulissenführung 52 hat dabei einen Steigungsabschnitt 74. Beim Entlanggleiten des Führungszapfens 50 am Steigungsabschnitt 74 wird der Deckelhimmel 16 an seinem hinteren Ende 60 etwas angehoben, um über den angrenzenden feststehenden Rand des Fahrzeughimmels gleiten zu können. Im weiteren Verlauf der Verschiebebewegung kann der Führungszapfen 50 aus der Kulissenführung 52 ausrasten, indem das Kunststoffteil 54 bei Erreichen der Vorsprünge 70 entsprechend nachgibt und ein Vorbeiwandern des Führungszapfens 50 an den Vorsprüngen 70 erlaubt.

Wie im ausgestellten Zustand in Figur 4 gezeigt, ist das Schwenklager 30 unterhalb der Lagerstelle zur Verbindung mit dem Deckel, das heißt unterhalb des Schwenklagers 38, positioniert.

Es muß im übrigen auch nicht der gesamte Deckelhimmel 16 ausstellbar sein, es reicht beispielsweise aus, wie dies in Figur 4 auch angedeutet ist, daß nur ein hinterer Abschnitt des Deckelhimmels, zum Beispiel das hintere Drittel des Deckelhimmels, nach oben schwenkbar ausgebildet ist und der übrige Teil des Deckelhimmels beim Ausstellen horizontal positioniert bleibt.

## Patentansprüche

1. Fahrzeugdach, mit
einer Dachöffnung (12),
einem ausstellbaren Deckel (14) zum Schließen der Dachöffnung (12), einem unterhalb des Deckels (14) positionierbaren Deckelhimmel (16),
einem Gestänge (20) zwischen Deckel (14) und Deckelhimmel (16), durch das der Deckel (14) und der Deckelhimmel (16) beim Ausstellen des Deckels (14) miteinander gekoppelt werden können und durch das der hintere Rand (60) des Deckelhimmels (16) beim Ausstellen des Deckels (14) angehoben wird, wobei das Gestänge (22) einen beim Ausstellen des Deckels (14) schwenkenden Schlepphebel (32) hat, der in einem, bezogen auf den ausgestellten Zustand des Deckels (14), an seinem unteren Ende liegenden fahrzeugdachseitigen Schwenklager (30) gehaltert ist und der eine Lagerstelle (38) zur Verbindung mit dem Deckel (14) sowie eine Lagerstelle (50) zur Verbindung mit dem Deckelhimmel (16) hat, wobei das fahrzeugdachseitige Schwenklager (30) im ausgestellten Zustand des Deckels (14) unterhalb der Lagerstelle (38) zur Verbindung mit dem Deckel (14) liegt, **dadurch gekennzeichnet, daß** das fahrzeugdachseitige Schwenklager (30) an einer Führung angebracht ist, mittels der das fahrzeugdachseitige Schwenklager (30) beim Ausstellen des Deckels (14) nach oben bewegt wird.

2. Fahrzeugdach nach Anspruch 1, **dadurch gekennzeichnet, daß** eine dachfeste Längsführung (18) zur Horizontalverschiebung des Deckels (14) vorgesehen ist, in der ein verfahrbarer Schlitten (20) geführt ist, und daß die Führung für das fahrzeugdachseitige Schwenklager (30) auf dem Schlitten (20) sitzt.

3. Fahrzeugdach nach Anspruch 1 oder 2, **dadurch gekennzeichnet, daß** die Führung für das fahrzeugdachseitige Schwenklager (30) ein schwenkbarer Lagerungshebel (26) ist.

4. Fahrzeugdach nach den Ansprüchen 2 und 3, **dadurch gekennzeichnet, daß** der Lagerungshebel (26) einerseits schwenkbar an dem Schlitten (20) und andererseits über das fahrzeugdachseitige Schwenklager (30) mit dem Schlepphebel (32) gekoppelt ist.

5. Fahrzeugdach nach einem der Ansprüche 2 bis 4, **dadurch gekennzeichnet, daß** am Schlepphebel (32) nahe der Lagerstelle zur Verbindung mit dem Deckelhimmel (16) ein Anschlag (36) vorgesehen ist, der bei geschlossener Dachöffnung (12) und/oder horizontalverschobenem Deckel (14) an der Längsführung (18) anliegt.

6. Fahrzeugdach nach Anspruch 5, **dadurch gekennzeichnet, daß** der Anschlag (36) bei nicht ausgestelltem Deckel (14) an der Längsführung (18) anliegt.

7. Fahrzeugdach nach einem der vorhergehenden Ansprüche, **dadurch gekennzeichnet, daß** der Schlepphebel (32) über einen einerseits schwenkbar an ihm und andererseits schwenkbar am Deckel (14) angebrachten Verbindungshebel (40) mit dem Deckel (14) gekoppelt ist.

8. Fahrzeugdach nach einem der vorhergehenden Ansprüche, **dadurch gekennzeichnet, daß** sich der Schlepphebel (32) bei geschlossener Dachöffnung (12) im wesentlichen horizontal erstreckt, wobei an seinem einen Ende der Lagerungshebel (26) angreift, welcher sich schräg abwärts erstreckt, und wobei an seinem anderen Ende der sich schräg aufwärts erstreckende Verbindungshebel (40) angreift.

9. Fahrzeugdach nach Anspruch 7 oder 8, **dadurch gekennzeichnet, daß** ein mit dem Deckel (14) verbundener, einseitig wirkender Anschlag (46) vorgesehen ist, der beim Ausstellen des Deckels (14) die Winkelstellung des Verbindungshebels (40) relativ zum Deckel (14) festlegt.

10. Fahrzeugdach nach Anspruch 9, **dadurch gekennzeichnet, daß** der einseitig wirkende Anschlag (46) beim Absenken des Deckels (14) die Winkelstellung des Verbindungshebels (40) zum Deckel (14) nicht festlegt.

11. Fahrzeugdach nach Anspruch 10, **dadurch gekennzeichnet, daß** der einseitig wirkende Anschlag (46) beim Absenken des hinteren Randes (24) des Deckels (14) bei geschlossenem Fahrzeugdach zur Horizontalverschiebung des Deckels (14) die Winkelstellung des Verbindungshebels (40) zum Deckel (14) nicht festlegt.

12. Fahrzeugdach nach einem der vorhergehenden Ansprüche, **dadurch gekennzeichnet, daß** die Verbindung des Schlepphebels (32) mit dem Deckelhimmel (16) durch eine Kulissenführung (52) gebildet ist.

13. Fahrzeugdach nach Anspruch 12, **dadurch gekennzeichnet, daß** am Deckelhimmel (16) die Kulissenführung (52) angebracht ist, aus der beim Verschieben des Deckelhimmels (16) ein Führungszapfen (50) ausrastbar ist.

14. Fahrzeugdach nach Anspruch 12 oder 13, **dadurch gekennzeichnet, daß** die Kulissenführung (52) durch ein C-förmiges Kunststoffteil (54) gebildet wird, das einen Vorsprung (70) zum Anschlag des Führungszapfens (50) hat, wobei das Kunststoffteil (54) zum Ausrasten des Führungszapfens (50) aus der Kulissenführung (52) elastisch so verformt werden kann, daß der Führungszapfen (50) am Vorsprung (70) vorbeiwandern kann.

15. Fahrzeugdach nach einem der Ansprüche 12 bis 14, **dadurch gekennzeichnet, daß** die Kulissenführung (52) einen Steigungsabschnitt (74) hat, durch den der Deckelhimmel (14) an seinem hinteren Rand (60) zu Beginn des Horizontalverschiebens aus der Schließstellung angehoben wird.

## Claims

1. A vehicle roof, comprising
a roof opening (12),
a tiltable cover (14) for closing the roof opening (12),
a cover lining (16) able to be positioned beneath the cover (14),
a lever system (22) between the cover (14) and the cover lining (16), by which the cover (14) and the cover lining (16) can be coupled to each other when the cover (14) is tilted and by which the rear edge (60) of the cover lining (16) is lifted when the cover (14) is tilted, the lever system (22) having a drag lever (32) that can swivel when the cover (14) is tilted and that is supported in a vehicle-roof-side swivel bearing (30) that is situated, with respect to the tilted state of the cover (14), at the lower end of the drag lever, and that has a bearing (38) for connecting to the cover (14) as well as a bearing (50) for connecting to the cover lining (16), the vehicle-roof-side swivel bearing (30), in the tilted state of the cover (14), being below the bearing (38) for connecting to the cover (14), wherein the vehicle-roof-side swivel bearing (30) is attached to a guide, by which the vehicle-roof-side swivel bearing (30) is moved upwards when the cover (14) is tilted.

2. The vehicle roof as recited in Claim 1, **characterized in that**, for the horizontal motion of the cover (14), a roof-fixed longitudinal guide (18) is provided, in which a movable slide (20) is guided, and that the guide for the vehicle-roof-side swivel bearing (30) sits on the slide (20).

3. The vehicle roof as recited in Claim 1 or 2, **characterized in that** the guide for the vehicle-roof-side swivel bearing (30) is a support lever (26) that can swivel.

4. The vehicle roof as recited in Claims 2 and 3, **characterized in that** the support lever (26) is coupled, on the one hand, to the slide (20) so as to be able to swivel and, on the other hand, via the vehicle-roof-side swivel bearing (30) to the drag lever (32).

5. The vehicle roof as recited in any of Claims 2 through 4, **characterized in that**, on the drag lever (32) in the vicinity of the bearing for connecting to the cover lining (16), a limit stop (36) is provided, which contacts the longitudinal guide (18) when the roof opening (12) is closed and/or the roof (14) is moved horizontally.

6. The vehicle roof as recited in Claim 5, **characterized in that** the limit stop (36) contacts the longitudinal guide (18) when the cover (14) is not tilted.

7. The vehicle roof as recited in any of the preceding claims, **characterized in that** the drag lever (32) is coupled to the cover (14) by a connecting lever (40) that, on the one hand, is attached to the drag lever (32) so as to be able to swivel and, on the other hand, is attached to the cover (14) so as to be able to swivel.

8. The vehicle roof as recited in any of the preceding claims, **characterized in that** the drag lever (32), when the roof opening (12) is closed, extends substantially horizontally, the support lever (26), which extends in a downwards diagonal direction, attaching at one end of the drag lever, and the connecting lever (40), which extends in an upwards diagonal direction, attaching at its other end.

9. The vehicle roof as recited in Claim 7 or 8, **characterized in that** a limit stop (46) is provided, which operates on one side, which is connected to the cover (14), and which, when the cover (14) is tilted, maintains the angular position of the connecting lever (40) relative to the cover (14).

10. The vehicle roof as recited in Claim 9, **characterized in that**, when the cover (14) is lowered, the limit stop (46), which operates on one side, does not determine the angular position of the connecting lever (40) with respect to the cover (14).

11. The vehicle roof as recited in Claim 10, wherein, when the lower edge (24) of the cover (14) is lowered when the vehicle roof is closed for the purpose of moving the cover (14) horizontally, the limit stop (46), which operates on one side, does not determine the angular position of the connecting lever (40) relative to the cover (14).

12. The vehicle roof as recited in any of the preceding claims, **characterized in that** the connection of the drag lever (32) to the cover lining (16) is effected by a guide slot (52).

13. The vehicle roof as recited in Claim 12, **characterized in that** the guide slot (52) is arranged on the cover lining (16) and that a guide pin (50) can be released from the guide slot (52) when the cover lining (16) is moved.

14. The vehicle roof as recited in Claim 12 or 13, **characterized in that** the guide slot (52) is formed by a C-shaped plastic part (54), which has a projection (70) for forming a limit stop for the guide pin (50), it being possible to elastically deform the plastic part (54) for releasing the guide pin (50) from the guide slot (52), such that the guide pin (50) can move past the projection (70).

15. The vehicle roof as recited in any of Claims 12 through 14, **characterized in that** the guide slot (52) has an ascending segment (74), by which the cover lining (14) can be lifted at its lower edge (60) from the closed position at the beginning of the process of horizontal motion.

## Revendications

1. Toit de véhicule, comportant
une ouverture de toit (12),
un couvercle (14) susceptible d'être ouvert vers l'extérieur, et destiné à fermer l'ouverture de toit (12),
un plafond ou pavillon de toit (16), pouvant être positionné au-dessous du couvercle (14),
une timonerie (22) entre le couvercle (14) et le pavillon de toit (16), et au moyen de laquelle le couvercle (14) et le pavillon de toit (16) peuvent être couplés ensemble pour l'ouverture du couvercle (14) et au moyen de laquelle le bord arrière (60) du pavillon de toit (16) est levé à l'ouverture du couvercle (14), la timonerie (22) comprenant un levier remorqué (32) pivotant à l'ouverture du couvercle (14), et qui est retenu à un palier de pivotement (30) situé du côté du toit de véhicule, à son extrémité inférieure si on se réfère à l'état ouvert du couvercle (14), et qui comporte un point de tourillonnement (38) pour la liaison au couvercle (14) ainsi qu'un point de tourillonnement (50) pour la liaison au pavillon de toit (16), le palier de pivotement (30) situé du côté du toit de véhicule, lorsque le couvercle (14) est à l'état ouvert, étant situé au-dessous du point de tourillonnement (38) pour la liaison avec le couvercle (14), **caractérisé en ce que** le palier de pivotement (30) situé du côté du toit de véhicule est monté sur un guidage, au moyen duquel le palier de pivotement (30) situé du côté du toit de véhicule est déplacé vers le haut lorsque le couvercle (14) est ouvert vers l'extérieur.

2. Toit de véhicule selon la revendication 1, **caractérisé en ce qu'**est prévu un guidage longitudinal (18) fixé au toit pour le coulissement horizontal du couvercle (14), guidage longitudinal dans lequel un chariot (20) déplaçable est guidé, et **en ce que** le guidage, pour le palier de pivotement (30) situé du côté du toit de véhicule, est monté sur le chariot (20).

3. Toit de véhicule selon la revendication 1 ou 2, **caractérisé en ce que** le guidage prévu pour le palier de pivotement (30) du côté du toit de véhicule est un levier de palier (26) pivotant.

4. Toit de véhicule selon les revendications 2 et 3, **caractérisé en ce que** le levier de palier (26) est couplé, d'une part, à pivotement sur le chariot (20) et, d'autre part, au levier remorqué (32), par l'intermédiaire du palier de pivotement (30) situé du côté du toit du véhicule.

5. Toit de véhicule selon l'une des revendications 2 à 4, **caractérisé en ce que**, sur le levier remorqué (32) est prévue, à proximité du point de tourillonnement assurant la liaison au pavillon de toit (16), une butée (36) qui, lorsque l'ouverture de toit (12) est fermée et/ou lorsque le couvercle (14) est déplacé horizontalement, appuie sur le guidage longitudinal (18).

6. Toit de véhicule selon la revendication 5, **caractérisé en ce que** la butée (36) s'appuie sur le guidage longitudinal (18) lorsque le couvercle (14) n'est pas ouvert.

7. Toit de véhicule selon l'une des revendications précédentes, **caractérisé en ce que** le levier remorqué (32) est couplé au couvercle (14) par l'intermédiaire d'un levier de liaison (40), qui est d'une part, monté à pivotement sur lui et, d'autre part, monté à pivotement sur le couvercle (14).

8. Toit de véhicule selon l'une des revendications précédentes, **caractérisé en ce que** le levier remorqué (32), lorsque l'ouverture de toit (12) est fermée, s'étend de façon sensiblement horizontale et **en ce que**, à l'une de ses extrémités, agit le levier de palier (26), qui s'étend obliquement vers le bas et, à l'autre extrémité, agit le levier de liaison (40) s'étendant de façon inclinée vers le haut.

9. Toit de véhicule selon la revendication 7 ou 8, **caractérisé en ce qu'**est prévue une butée (46) agissant d'un côté, reliée au couvercle (14), et qui, à l'ouverture du couvercle (14), fixe la position angulaire du levier de liaison (40) par rapport au couvercle (14).

10. Toit de véhicule selon la revendication 9, **caractérisé en ce que**, lors de la descente du couvercle (14), la butée (46) agissant d'un côté ne fixe pas la position angulaire du levier de liaison (40) par rapport au couvercle (14).

11. Toit de véhicule selon la revendication 10, **caractérisé en ce que**, lors de la descente du bord arrière (24) du couvercle (14) lorsque le toit de véhicule est fermé pour le coulissement horizontal du couvercle (14), la butée (46) agissant d'un côté ne fixe pas la position angulaire du levier de liaison (40) par rapport au couvercle (14).

12. Toit de véhicule selon l'une des revendications précédentes, **caractérisé en ce que** la liaison du levier remorqué (32) au pavillon de couvercle (16) est formée par un guidage à coulisse (52).

13. Toit de véhicule selon la revendication 12, **caractérisé en ce que**, sur le pavillon de couvercle (16), est monté le guidage à coulisse (52) d'où, lors du coulissement du pavillon de couvercle (16), un téton de guidage (50) est susceptible d'être déverrouillé.

14. Toit de véhicule selon la revendication 12 ou 13, **caractérisé en ce que** le guidage à coulisse (52) est formé par une pièce en matière synthétique (54) en forme de C, présentant une saillie (70) pour la mise en butée du téton de guidage (50), la pièce en matière synthétique (54) pouvant être déformée élastiquement pour faire sortir le téton de guidage (50) hors du guidage à coulisse (52), de sorte que le téton de guidage (50) puisse passer au-delà de la saillie (70).

15. Toit de véhicule selon l'une des revendications 12 à 14, **caractérisé en ce que** le guidage à coulisse (52) présente un tronçon incliné (74), au moyen duquel le pavillon de couvercle (16) est levé de sa position de fermeture, sur son bord arrière (60), au début du coulissement horizontal.
